# EUROPEAN PATENT APPLICATION

(11) **EP 1 729 402 A1**
(43) Date of publication of application: **06.12.2006**
(21) Application number: 05721327.4
(22) Date of filing: 23.03.2005
(51) Int. Cl.: H02K 9/06

(54) **MOTOR COOLING DEVICE**

(30) Priority: 24.03.2004 JP 2004086815
(71) Applicant: DAIKIN INDUSTRIES, LTD., Osaka-shi, Osaka 530-8323 (JP)
(72) Inventor: KINOSHITA, Kanjirou, c/o Daikin Industries, Ltd., Sakai-shi, Osaka 5918511 (JP)
(74) Representative: HOFFMANN EITLE
(86) International application number: PCT/JP2005/005277
(87) International publication number: WO 2005/091470

(57) **Abstract**

A motor cooling device includes an impeller 2, supported by a rotary shaft 1a of a motor 1, and a fan cover 4. The fan cover 4 encases a front portion and a peripheral portion of the impeller 2 and has an air inlet 5 in a front surface and an air outlet 6 in the rear. A partition member 7 is arranged in the fan cover 4 and extends from a position outward from the air inlet 5 toward the impeller 2. A hollow portion 8 is formed between the periphery of the partition member 7 and an inner surface of the fan cover 4. Negative pressure generated by a cavity effect of an eddy produced in the hollow portion 8 draws a main air flow, which passes by the impeller 2, toward the distal side of the vanes 3 of the impeller 2. This improves the aerodynamic capability and operation noise characteristic of the impeller 2.

## Description

### TECHNICAL FIELD

The present invention relates to a cooling device for a motor, and more particularly, to a motor cooling device formed to efficiently cool the periphery of a motor stator.

### BACKGROUND ART

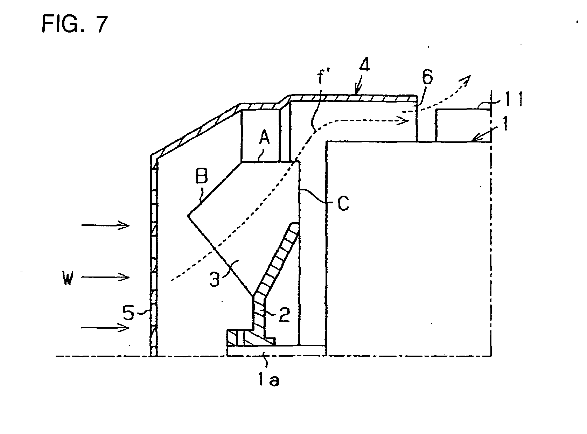

Fig. 7 shows a cooling device for a motor in the prior art. The cooling device includes a radial plate type impeller 2, which is supported by a rotary shaft 1a of a motor 1, and a fan cover 4, which encases the impeller 2 and which is formed from metal plates. The impeller 2 includes a plurality of vanes 3. An air inlet 5 and an air outlet 6 are formed in the fan cover 4. The impeller 2 includes a peripheral surface A, a front surface B, and a rear surface C. In this cooling device, an air flow W entering the air inlet 5 is as indicated by the broken line f' in the fan cover 4 and mostly does not travel through the rear surface C of the impeller 2. Accordingly, application of the cooling device to a compact high-output motor results in a problem in which the fan capability causes insufficient cooling. Application of the cooling device to a high speed motor results in a problem in which the fan operation noise increases.

Various measures have been taken to solve the above problems.

For example, patent publication 1 describes a cooling device in which an air flow passage of a motor cooling fan extends in a direction diagonal to the rotary shaft. Additionally, the vanes have an outer diameter that is greater than the outer diameter of the housing of the motor.
Patent Publication 1: Japanese Laid-Open Patent Publication No. 11-289716

### DISCLOSURE OF THE INVENTION

The technique described in patent publication 1 improves the flow producing capability. However, the problem in which the operation noise is high is not solved. In other words, a cooling device having a simple structure that improves the cooling capability while reducing the operation noise has still not been realized.

It is an object of the present invention to provide a cooling device having a simple structure that improves the cooling capability while reducing operation noise.

To achieve the above object, in one aspect of the present invention, a motor cooling device includes an impeller, which is supported by a rotary shaft of a motor, and a fan cover, which encases a front portion and a peripheral portion of the impeller and has an air inlet in a front surface and an air outlet in the rear. In the motor cooling device, a partition member is arranged in the fan cover and extends from a position outward from the air inlet toward the impeller. A hollow portion is formed between the periphery of the partition member and an inner surface of the fan cover.

In the above structure, negative pressure is generated by a cavity effect of an eddy produced in the hollow portion, which is formed between the partition member and the fan cover. The negative pressure draws a main air flow, which passes by the impeller, toward the distal side of vanes of the impeller. Consequently, the vane surface of the impeller functions effectively to improve the aerodynamic capability (i.e., cooling capability) and operation noise characteristic of the impeller.

In the above motor cooling device, it is preferred that the partition member include a distal portion facing toward a front distal portion of a vane of the impeller. This causes the cavity effect of the hollow portion, which is defined between the periphery of the partition member and the inner surface of the fan cover, to be further prominent.

It is preferred that the partition member have an inner diameter Φ₁ that is greater than an inner diameter Φ₂ of the front distal portion 3a of the vane 3. In this case, the exfoliating region is reduced, and the cooling capability and operation noise characteristic of the impeller are further improved.

It is preferred that the partition member 7 have an outer diameter Φ₃ that is smaller than an outer diameter Φ₄ of the impeller 2. In this case, an effect that forms a circulation flow is obtained in addition to the cavity effect of the hollow portion. Thus, the vane surface functions further effectively, and the cooling capability and operation noise characteristic of the impeller are further improved.

It is preferred that a constricting flow space, arranged at an exit of the impeller, have an entrance in the proximity of a rear surface of a vane of the impeller. The constricting flow space is defined by a motor end surface, which has a circumferential surface expanding radially and diagonally outward toward the rear, and a space formation member, which is formed on the inner surface of the fan cover. In this case, a rotation direction flow at the exit of the impeller is shifted and rectified to an axial flow in the constricting flow space. This improves the operation noise characteristic.

An enlarging flow passage enlarged toward the air outlet may be arranged downstream from the constricting flow space. In this case, a diffuser effect occurs in the enlarging flow passage and converts the dynamic pressure of the generated flow to dynamic pressure. This improves the cooling capability.

An end portion of a cooling fin of the motor may be arranged at a downstream end of the enlarging flow passage. Alternatively, the downstream end of the enlarging flow passage may face towards the end portion of the cooling fin. This forms a converging flow directed toward the cooling fin and improves the cooling capability.

A radial plate impeller may be employed as the impeller. In this case, the capability of the radial plate impeller does not vary even if the rotation direction of the impeller changes. Thus, rotation is reversible. Further, since the vane exit angle is 90°, the static pressure produced by the impeller 2 is greater than that produced by vanes facing forward or rearward directions. This enables an increase in the impeller capability.

The vane of the impeller may have a front edge including a serration. In this case, interference noise produced when air flow turbulence at the front edge of the vane interferes with rear edge of the vane is reduced. This improves the operation noise characteristic.

The partition member is detachable from the fan cover. In this case, specification changes would be facilitated by preparing various types of partition members so that the partition member can be changed without changing the shape of the fan cover for impellers having vanes with different outer diameters and widths.

### BRIEF DESCRIPTION OF THE DRAWINGS

Fig. 1 is a half cross-sectional view showing a motor cooling device according to a first embodiment of the present invention;
Fig. 2 is a half cross-sectional view showing a modification of the motor cooling device of the first embodiment;
Fig. 3 is a half cross-sectional view showing a motor cooling device according to a second embodiment of the present invention;
Fig. 4 is a half cross-sectional view showing an impeller in a motor cooling device according to a third embodiment of the present invention;
Fig. 5 is a half cross-sectional view showing a motor cooling device according to a fourth embodiment of the present invention;
Fig. 6 is a half cross-sectional view showing a motor cooling device according to a fifth embodiment of the present invention; and
Fig. 7 is a half cross-sectional view showing a motor cooling device in the prior art.

### BEST MODE FOR CARRYING OUT THE INVENTION

Several preferred embodiments of the present invention will now be discussed with reference to the attached drawings. The present invention is not limited to the embodiments described below.

### First Embodiment

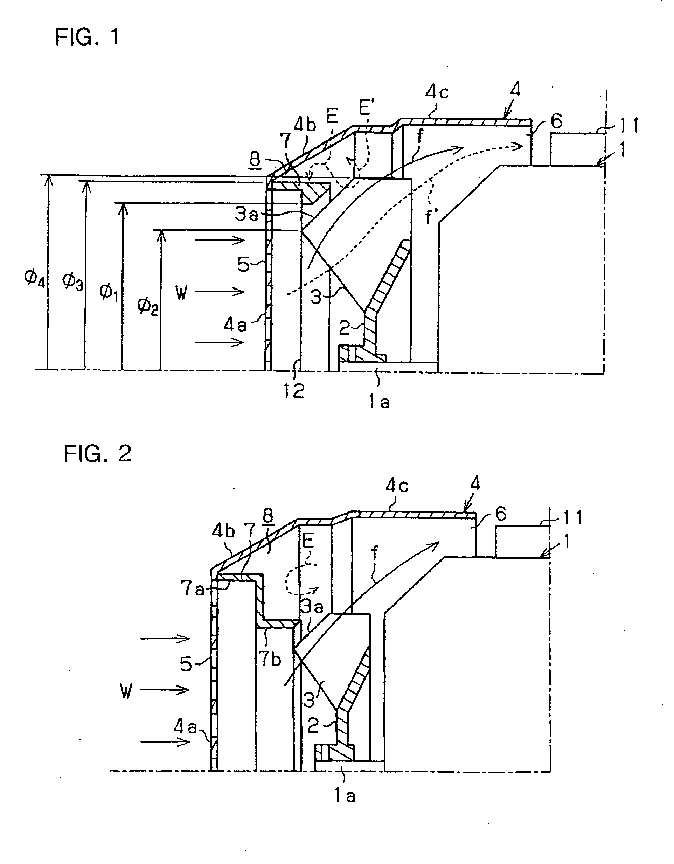

Fig. 1 shows a motor cooling device according to a first embodiment of the present invention. The motor cooling device includes an impeller 2, which is supported by a rotary shaft 1a of a motor 1, and a fan cover 4, which encases a front portion and a peripheral portion of the impeller 2 and which includes an air inlet 5 in the front and an air outlet 6 in the rear. In the present embodiment, the impeller 2 is a radial plate impeller having vanes 3 with an exit angle of 90°. In such a structure, the capability of the radial plate impeller does not vary even if the rotation direction of the impeller changes. Thus, rotation is reversible. Further, since the vane exit angle is 90°, the static pressure produced by the impeller 2 is greater than that produced by vanes facing forward or rearward directions. This enables an increase in the impeller capability.

The fan cover 4 includes an annular partition member 7 extending from the outer side or the air inlet 5 (i.e., the peripheral portion of the front surface 4a of the fan cover 4) towards a front surface 3a of the vanes 3 of the impeller 2. An annular hollow portion 8 is formed between the periphery of the partition member 7 and the inner surface of the fan cover 4.

The fan cover 4 has a front surface 4a, which includes the air inlet 5, a conical portion 4a, which is inclined from the peripheral portion of the front surface 4a in the downstream direction, and a generally cylindrical portion 4c, which extends from the downstream end of the conical portion 4a toward the air outlet 6. The air outlet 6 faces toward a cooling fin 11 of the motor 1.

In the above structure, negative pressure is generated by a cavity effect of an eddy E produced in the hollow portion 8, which is formed between the partition member 7 and the fan cover 4. The negative pressure draws a main air flow f, which passes by the impeller 2, toward the distal side of the vanes 3 of the impeller 2. Consequently, the vane surface of the impeller 2 functions effectively to improve the aerodynamic capability (i.e., cooling capability) and operation noise characteristic of the impeller 2.

The partition member 7 is cylindrical. An inwardly extending flange 12 having a trapezoidal cross-section and including an inclined surface parallel to the front surface 3a of the vanes 3 of the impeller 2 is formed integrally with the distal portion of the partition member 7. This arranges the inwardly extending flange 12 of the partition member 7 in the proximity of vane front surface 3a so that the cavity effect of the hollow portion 8 becomes further prominent.

The partition member 7 has an inner diameter Φ₁, which is larger than the inner diameter Φ₂ of the front surface distal portion 3a of the vanes 3. This reduces the exfoliating region and further improves the aerodynamic capability (i.e., cooling capability) and operation noise characteristic of the impeller 2.

The partition member 7 has an outer diameter Φ₃, which is smaller than the outer diameter Φ₄ of the impeller 2. This adds an effect that forms a circulation flow E' in addition to the cavity effect of the hollow portion 8. Thus, the vane surface functions further effectively, and the cooling capability and operation noise characteristic of the impeller 2 are further improved.

In the present embodiment, the partition member 7 and the fan cover 4 are an integral molded product made of synthetic resin. However, the partition member 7 may be detachable from the fan cover 4. If the partition member 7 is detachable from the fan cover 4, for example, when using an impeller 2 in which the width or outer diameter of the vanes 3 is decreased as shown in the motor cooling device of Fig. 2, a partition member 7 having a large cylindrical portion 7a, which is attached to the front surface 4a of the fan cover 4, and a small diameter portion 7b may be used. In other words, as shown by the examples of Figs. 1 and 2, specification changes would be facilitated by preparing various types of partition members 7 so that the partition member 7 can be changed without changing the shape of the fan cover 4.

### Second Embodiment

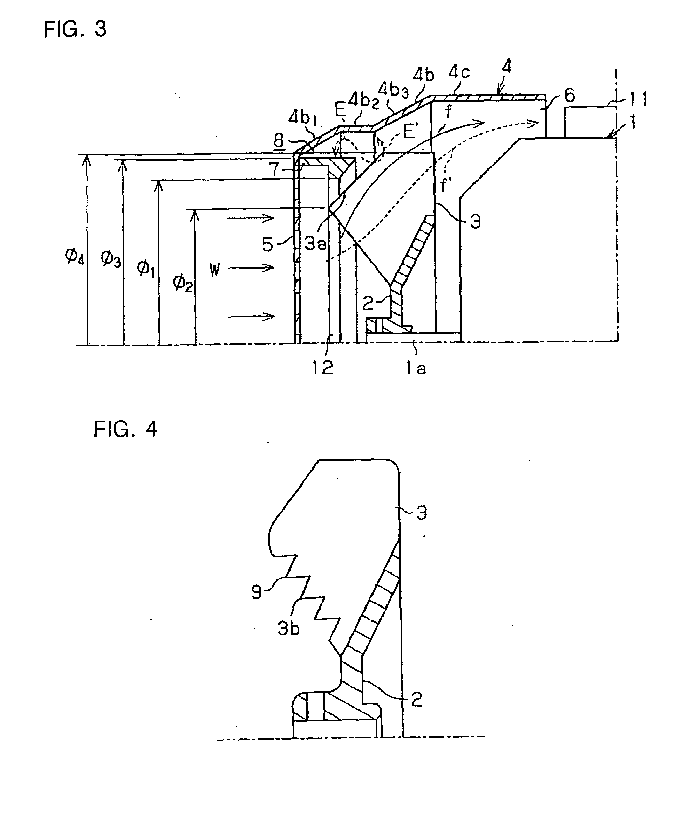

Fig. 3 shows a motor cooling device according to a second embodiment of the present invention. In this case, the conical portion 4b of the fan cover 4 is divided into a front conical portion 4b₁ and a rear conical portion 4b₃ sandwiching an intermediate cylindrical portion 4b₂. The intermediate cylindrical portion 4b₂ of the fan cover conical portion 4b is formed to cover the outer side of the distal portion of the partition member 7. This decreases the outer diameter of the hollow portion 8 formed between the partition member 7 and the fan cover 4. Thus, the cavity effect is strengthened in the hollow portion 8. The remaining structure and advantages are the same as the first embodiment and thus will not be described.

### Third Embodiment

Fig. 4 shows the main portion of an impeller used in a motor cooling device according to a third embodiment of the present invention.

In this case, a serration 9 is formed in a front edge 3b of the vanes 3 in the impeller 2. This reduces interference noise produced when air flow turbulence at the front edge of the vanes 3 interfere with the rear edge of the vanes 2 and thereby improves the operation noise characteristic. The remaining structure and advantages are the same as the first embodiment and thus will not be described.

### Fourth Embodiment

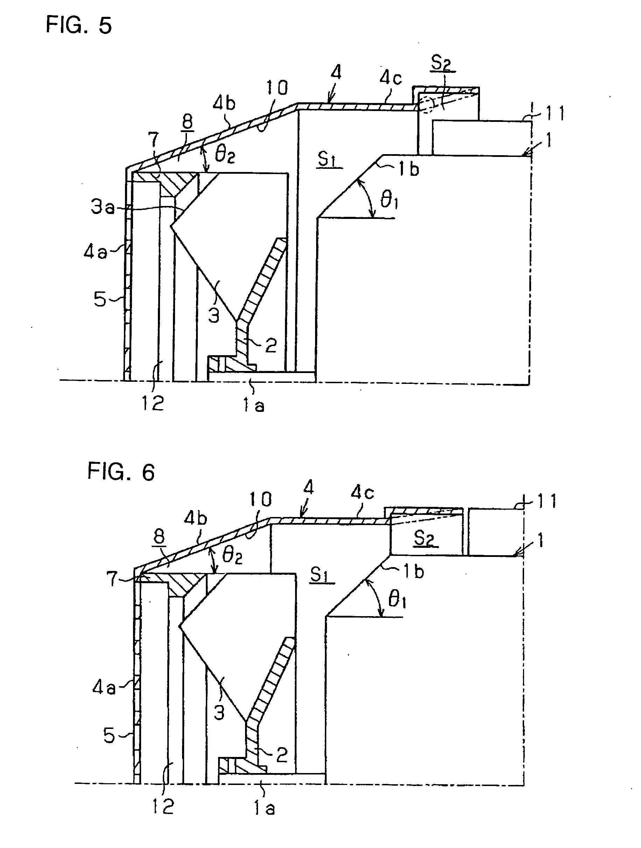

Fig. 5 shows a motor cooling device according to a fourth embodiment of the present invention. In this case, a constricting flow space S₁ is arranged at the exit side of the impeller 2. The constricting flow space S₁ has an entrance in the proximity of the rear surface of the vanes 3 of the impeller 2 and is defined by a motor end surface 1b, which has a circumferential surface expanding radially and diagonally outward toward the rear, and a space formation member 10, which is formed on the inner surface of the fan cover 4. In the preferred embodiment, the space formation member 10 is formed by the inner surface of the conical portion 4b in the fan cover 4. Instead, a separate member forming the space formation member 10 may be attached to the inner surface of the fan cover conical portion 4b.

The constricting flow space S₁ is formed with the space formation member 10 having an enlarging angle θ₂ that is set to be smaller than an enlarging angle θ₁ of the motor end surface 1b. An enlarging flow passage S₂, which is enlarged toward the air outlet 6, is arranged downstream from the constricting flow space S₁. The enlarging flow passage S₂ may be formed by bending and enlarging a downstream end portion of the cylindrical portion 4c in the fan cover 4 as shown by the solid lines in the drawing or by gradually enlarging the downstream end portion as shown by the broken lines in the drawing.

Further, the downstream end of the enlarging flow passage S₂ encases the end portion of the cooling fin 11 of the motor 1. With the above structure, a rotation direction flow of air at the exit side of the impeller 2 is shifted and rectified to an axial flow in the constricting flow space S₁. This improves the operation noise characteristic. Further, a diffuser effect occurs in the enlarging flow passage S₂ and effectively converts the dynamic pressure of the generated flow to dynamic pressure. This forms a converging flow directed toward the cooling fin 11 and improves the cooling capability. The axial position of the downstream end of the enlarging flow passage S₂ may be varied in the circumferential direction. The remaining structure and advantages are the same as the first embodiment and thus will not be described.

### Fifth Embodiment

Fig. 6 shows a motor cooling device according to a fifth embodiment of the present invention. The present embodiment includes the constricting flow space S₁ and the enlarging flow passage S₂, which are similar to those of the fourth embodiment. However, the present embodiment differs from the fourth embodiment in that the downstream end of the enlarging flow passage S₂ faces toward the end portion of the cooling fin 11. This also obtains the same advantages as the fourth embodiment.

## Claims

1. A motor cooling device including an impeller (2), which is supported by a rotary shaft (1a) of a motor (1), and a fan cover (4), which encases a front portion and a peripheral portion of the impeller (2) and has an air inlet (5) in a front surface and an air outlet (6) in the rear, the motor cooling device being **characterized by**:
a partition member (7) arranged in the fan cover (4) and extending from a position outward from the air inlet (5) toward the impeller (2), wherein a hollow portion (8) is formed between the periphery of the partition member (7) and an inner surface of the fan cover (4).

2. The motor cooling device according to claim 1, being **characterized in that**:
the partition member (7) includes a distal portion facing toward a front distal portion (3a) of a vane (3) of the impeller (2).

3. The motor cooling device according to claim 2, being **characterized in that**:
the partition member (7) has an inner diameter (Φ1) that is greater than an inner diameter (Φ2) of the front distal portion (3a) of the vane (3).

4. The motor cooling device according to claim 2 or 3, being **characterized in that**:
the partition member (7) has an outer diameter (Φ3) that is smaller than an outer diameter (Φ4) of the impeller (2).

5. The motor cooling device according to any one of claims 1, 2, and 3, being **characterized by**:
a constricting flow space (S1) arranged at an exit of the impeller (2) and having an entrance in the proximity of a rear surface of a vane (3) of the impeller (2), wherein the constricting flow space (S1) is defined by a motor end surface (1b), which has a circumferential surface expanding radially and diagonally outward toward the rear, and a space formation member (10), which is formed on the inner surface of the fan cover (4).

6. The motor cooling device according to claim 5, being **characterized by**:
an enlarging flow passage (S2) enlarged toward the air outlet (6) and arranged downstream from the constricting flow space (S₁).

7. The motor cooling device according to claim 6, being **characterized in that**:
the enlarging flow passage (S2) includes a downstream end in which an end portion of a cooling fin (11) of the motor (1) is arranged.

8. The motor cooling device according to claim 6, being **characterized in that**:
the enlarging flow passage (S2) includes a downstream end facing toward an end portion of a cooling fin (11) of the motor (1).

9. The motor cooling device according to any one of claims 1, 2, and 3, being **characterized in that**:
a radial plate impeller is employed as the impeller (2).

10. The motor cooling device according to claim 9, being **characterized in that**:
the vane (3) of the impeller (2) has a front edge (3b) including a serration (9).

11. The motor cooling device according to any one of claims 1, 2, and 3, being **characterized in that**:
the partition member (7) is detachable from the fan cover (4).
